# FASCICULE DE BREVET EUROPEEN

(11) **EP 1 286 084 B1**
(45) Date de publication et mention de la délivrance du brevet: **05.07.2006**
(21) Numéro de dépôt: 02025169.0
(22) Date de dépôt: 10.03.1998
(51) Int. Cl.: F16H 25/06, F01C 1/344, F16H 25/08, F16H 25/12

(54) **Mécanisme desmodromique**
Desmodromischer Antrieb
Desmodromic mechanism

(30) Priorité: 18.03.1997 CH 66297
(43) Date de publication de la demande: 26.02.2003
(62) Demande divisionnaire de: 98904341.9
(73) Titulaire: Bajulaz, Roger, 1209 Geneve (CH)
(72) Inventeur: Bajulaz, Roger, 1209 Geneve (CH)
(74) Mandataire: Micheli & Cie SA

(56) Documents cités:
- DE-B- 1 083 833
- US-A- 3 403 668

## Description

La présente invention a pour objet un mécanisme desmodromique comprenant un élément primaire et un élément secondaire reliés mécaniquement par une liaison desmodromique, c'est-à-dire telle que la vitesse d'un desdits éléments entraîne une vitesse bien déterminée pour l'autre.

De tels mécanismes se retrouvent dans des variateurs de vitesse, des multiplicateurs ou réducteurs de vitesse, des moteurs hydrauliques, pneumatiques ou à combustion, compresseurs, pompes, vérins, actionneurs linéaires, etc.

Pour réaliser des entraînements angulaires ou linéaires destinés à des mécanismes dont le but est de transmettre des mouvements permettant de modifier des volumes pour obtenir des pompes, compresseurs, etc, ou de réduire ou multiplier des vitesses avec une certaine précision, on fait usage d'engrenages qui présentent dans certains cas des inconvénients majeurs, tels que problèmes de graissage, bruit, encombrement, difficultés pour obtenir des déplacements sans jeu, prix de revient, etc.

Le brevet DE 338495 expose un mécanisme comprenant une came primaire et une came secondaire ainsi qu'un élément intermédiaire hébergeant des corps qui glissent ou roulent dans leur logement en permettant un déplacement rotatif entre lesdites trois parties principales. Les logements des corps dans l'élément intermédiaire constituent des guides pour leur mouvement. Ces corps comportent des surfaces lisses assurant un contact permanent avec la came primaire et la came secondaire et permettent l'entraînement entre les deux cames et l'élément intermédiaire. Les cames sont agencées de manière à ce que l'élément entraîné tourne avec une vitesse prédéterminée et différente de la vitesse de l'élément moteur, qui effectue également un mouvement rotatif.

Le brevet GB 1199257 décrit un réducteur de vitesse comprenant également une came primaire, une came secondaire et un élément intermédiaire. Dans une forme d'exécution ces éléments peuvent effectuer des mouvements linéaires relatifs en modifiant la vitesse de ou des éléments entraînés par rapport à la vitesse de l'élément moteur. Ce mécanisme comporte des éléments en contact permanent avec les deux cames et roulent dans des logements de l'élément intermédiaire servant comme guides du mouvement. L'assemblage et la conception des composants sont différents par rapport au mécanisme précédent.

Le document US 3468175 divulgue un mécanisme de transmission de mouvement. Dans une forme d'exécution, ce mécanisme sert à la transmission des mouvements linéaires avec une modification de la vitesse du mouvement et comporte également deux cames et un élément intermédiaire. Comme dans le mécanisme précédent, un mouvement linéaire de l'élément moteur peut être transformé en un mouvement linéaire d'une vitesse différente de l'élément entraîné à l'aide de ce mécanisme.

Toutefois, aucun des mécanismes précités n'est adapté à être utilisé comme moyen transformant un mouvement rotatif en mouvement linéaire, limitant ainsi son application à la transformation de la vitesse mais non pas de la forme du mouvement, ceci constituant un inconvénient important.

La demande de brevet allemand publiée 1 083 833 décrit un moteur à piston comportant un cylindre formant une came primaire, un piston coulissant dans ce cylindre et servant de guide à des billes prenant contact avec le cylindre et avec une tige de piston comportant des cames secondaires.

Cette réalisation comporte les caractéristiques du préambule des revendications 1 et 5 du présent brevet mais ce dispositif ne permet pas de réaliser ce que vise l'invention, à savoir transformer le mouvement rotatif d'un premier élément en un mouvement linéaire d'un second élément et vice-versa d'une valeur désirée. En effet, la course du piston est déterminée une fois pour toute constructivement et de plus une rotation continue de même sens de la came provoque un mouvement alternatif de va-et-vient du piston. Il ne s'agit donc pas, comme dans la présente invention, d'un système permettant de transformer un mouvement de rotation en un mouvement linéaire constant avec inversion du sens de mouvement linéaire lorsque le mouvement rotatif change de sens.

Le but est de réaliser les mécanismes mentionnés ci-dessus par un système desmodromique simple, précis, robuste.

Ce système permet l'emploi de matières plastiques, de céramique dans des conditions optimum. Il est possible de réaliser des mécanismes qui peuvent fonctionner sans graissage et d'une grande résistance mécanique.

Le but de la présente invention est de réaliser un tel mécanisme desmodromique, robuste, facile à réaliser, qui ne comporte aucun engrenage et qui permette de provoquer un mouvement linéaire de l'élément entraîné à partir d'un mouvement rotatif de l'élément moteur ou vice-versa.

La présente invention a pour objet un mécanisme desmodromique tendant à obvier aux inconvénients précités et permettant de réaliser les buts énoncés. Ce mécanisme desmodromique se caractérise par la combinaison d'éléments énoncés à la revendication 1 ou à la revendication 5.

Le dessin annexé illustre schématiquement et à titre d'exemple plusieurs formes d'exécution du mécanisme de l'invention.

Les figures 1, 2 et 3 sont des coupes longitudinale et transversale respectivement d'une première forme d'exécution du mécanisme.

Les figures 4 à 8 sont des coupes longitudinales et les figures 4a à 8a des coupes axiales d'une deuxième forme d'exécution du mécanisme illustrant les positions successives de celui-ci pour des incréments de 45° de l'élément primaire, l'élément intermédiaire étant stationnaire.

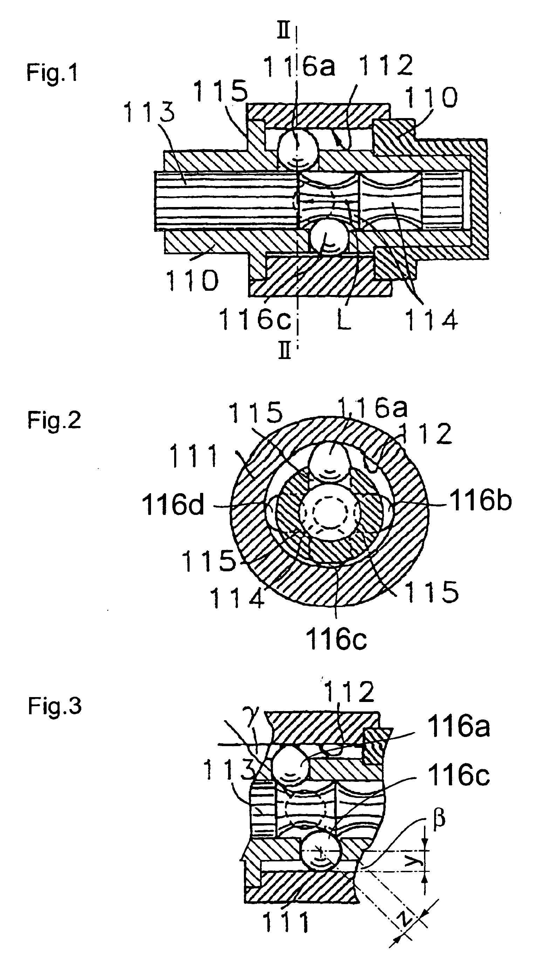

Une première forme d'exécution du mécanisme selon l'invention illustrée aux figures 1 à 3 constitue un vérin ou actionneur mécanique linéaire, basé sur un principe d'actionnement et de division qui sera expliqué en détail ci-dessous.

Ce mécanisme comporte un corps fixe 110 formant un élément intermédiaire sur lequel est tourillonnée une bague 111 dont la surface interne 112 excentrée constitue une came primaire à une levée du mécanisme. Une tige d'actionnement linéaire 113, cylindrique ou polygonale, coulisse dans le corps 110 et comporte sur sa partie terminale logée dans le corps au moins une partie, deux dans l'exemple illustré, en forme de diabolo 114 constituant une came secondaire.

Des perçages 115, quatre dans l'exemple illustré, traversent le corps radialement. Ces perçages sont décalés angulairement de 90° les uns par rapport aux autres et axialement d'une distance égale à 1/4 de la longueur L de la came secondaire en forme de diabolo 114. Les quatre billes sont ainsi disposées sur les ¾ de la longueur L d'une partie en diabolo de la came secondaire.

Des organes transmetteurs constitués par des billes sphériques 116 sont montés coulissant dans les perçages 115 et sont en contact permanent avec le corps 110 et chacune des cames primaire 112 et secondaire 114.

Pour une révolution complète de la bague 111 et donc de la came primaire, on obtient un déplacement linéaire de la longueur L de la came secondaire en forme de diabolo portée par la tige 113.

La figure 3 illustre le mécanisme lorsque la bague 111 a effectué 1/4 de tour à partir de la position illustrée à la figure 1. Les quatre billes ont fait avancer la tige 113 du quart de la longueur de la came en forme de diabolo.

En référence à la figure 1, on voit que l'organe transmetteur 116c est en contact avec le sommet de la came primaire 112 et le creux de la came secondaire 114. Dans cette position les tangentes aux points de contact de l'organe transmetteur 116c avec les cames primaire, respectivement secondaire, sont parallèles entre elles, comme pour l'organe transmetteur 116a. Dans cette position, les organes transmetteurs 116a,c ne peuvent transmettre aucun couple ni aucun mouvement.

Si l'on trace les mêmes tangentes, pour les organes transmetteurs 116a et 116c, comme indiqué à la figure 3, les points de contact de ces organes transmetteurs avec les cames primaire et secondaire ne sont pas situés sur un diamètre de l'organe transmetteur, mais ces tangentes forment un angle aigu β, γ entre elles. On remarque que ces angles β, γ sont en opposition. Ainsi, lorsque le mécanisme est à l'arrêt, la position relative des trois éléments, came primaire 112, came secondaire 114 et élément intermédiaire 110, est bloquée dans un sens par l'organe transmetteur 116a et dans l'autre par l'organe transmetteur 116c. Le mécanisme ne peut donc subir aucun déplacement involontaire.

Par contre, dès que la came primaire 112 est entraînée en rotation dans le sens anti-horaire selon la figure 2, l'organe transmetteur 116a est poussé vers l'intérieur provoquant un déplacement linéaire de la tige 113. Ceci est rendu possible car simultanément de par la rotation de la came primaire 112 un déplacement passif de l'organe transmetteur 116c est rendu possible.

Le sens de déplacement de la tige 113 dépend, pour un sens de rotation donné, de la bague 111, de la disposition des billes 116 qui forment un pas à gauche ou un pas à droite.

Ces angles aigus β et γ entre les tangentes aux points de contact de deux billes 116 avec les cames primaire 112 et secondaire 114 assurent ainsi un blocage du mécanisme lorsqu'il est à l'arrêt.

Cette forme d'exécution du mécanisme est particulièrement intéressante car la tige d'actionnement 113 peut, indépendamment de ses déplacements linéaires commandés par la bague 111, effectuer des mouvements de rotation sur elle-même sans modifier sa position axiale.

Le mécanisme décrit est strictement desmodromique, c'est-à-dire que les vitesses des éléments 111 et 113 sont strictement proportionnelles. Si la vitesse de rotation de la bague 111 est constante, la vitesse du mouvement linéaire de la tige 113 sera également constante, sans aucune ondulation.

La somme de la longueur y entre le centre de l'organe transmetteur et son contact avec la came primaire et de la longueur z entre le centre de l'organe transmetteur et de son contact avec la came secondaire est égale pour tous les éléments d'un même mécanisme et invariable dans toutes les positions de fonctionnement (figure 3).

On remarque dans cette exécution qu'au cours du mouvement du mécanisme le centre des quatre organes transmetteurs 116 est en permanence situé sur un cercle dont le centre est confondu avec l'axe de la came primaire 112. Ici, la came primaire 112 est constituée par un excentrique tandis que la came secondaire est constituée par des surfaces en forme de diabolo. La came secondaire 114 est située à l'intérieur de la came primaire 112.

Les forces de frottement ou de roulement sont très réduites puisqu'elles se limitent au glissement des organes transmetteurs 116 dans leurs guides 115 et à leur roulement contre les cames primaire 112 et secondaire 114.

Après la description de cette première forme d'exécution du mécanisme desmodromique selon l'invention il est évident que ce mécanisme se compose essentiellement d'une came primaire, d'une came secondaire et d'un élément intermédiaire définissant des guides linéaires dans lesquels coulissent des organes transmetteurs de mouvement; les deux cames et l'élément intermédiaire étant déplaçables les uns par rapport aux autres.

Pour la clarté et la précision de la description suivante, il faut dores et déjà définir que la came primaire peut se trouver à l'intérieur de la came secondaire ou vice-versa, ou que les deux cames peuvent se faire face axialement; mais toujours l'élément intermédiaire se trouve entre les deux cames.

Les deux cames peuvent être mobiles et l'élément intermédiaire stationnaire où l'une des cames et l'élément intermédiaire sont mobiles mais alors l'autre came est stationnaire. L'une ou l'autre des cames peut être entraînée, l'autre came ou l'élément intermédiaire étant alors l'entraîneur ou vice-versa.

On voit donc que le mécanisme selon l'invention est utilisé pour transformer la forme du mouvement, c'est-à-dire une rotation en un mouvement linéaire ou vice-versa. Il est alors appliqué pour réaliser des mouvements linéaires par exemple pour des vérins, des actionneurs linéaires des déplacements d'éléments de longueurs indéfinies en remplacement de crémaillères, chaînes, etc. Ainsi, en utilisant un même principe mécanique, plusieurs applications très diverses sont réalisables ce qui rend ce mécanisme particulièrement polyvalent.

Dans toutes les formes d'exécution du mécanisme, les organes transmetteurs sont toujours en permanence en contact avec les cames primaire et secondaire et avec l'élément intermédiaire dans lesquels ils coulissent radialement et/ou perpendiculairement par rapport à l'axe du mécanisme.

Ce mécanisme qui ne présente donc aucun jeu permet une transmission desmodromique parfaite du mouvement d'un élément sur l'autre. Il y a un glissement ou un roulement permanent des organes transmetteurs qui présentent une surface de contact parfaitement lisse, circulaire ou sphérique sur la came primaire et simultanément sur la came secondaire.

La forme des transmetteurs peut varier. Ils ont toutefois généralement une portion périphérique sphérique ou cylindrique de section circulaire qui est en contact avec chacune des cames primaire et secondaire.

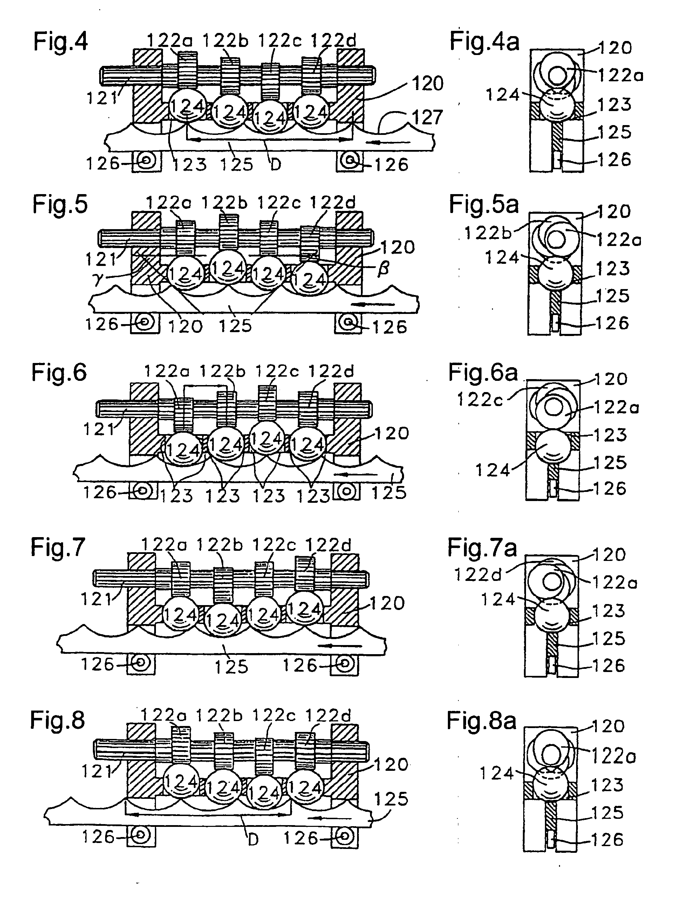

Une deuxième forme d'exécution du mécanisme illustré aux figures 4 à 8a est également un mécanisme à déplacement linéaire. Il comporte un bâti 120 constituant l'élément intermédiaire, ici en coupe longitudinale en forme de H. Dans la partie supérieure du bâti, entre les branches du H, est tourillonné un arbre d'entrée 121 solidaire de la came primaire formée ici de quatre excentriques 122a,b,c,d décalés angulairement de 90° les uns par rapport aux autres. La barre horizontale du H du bâti 120 comporte quatre perçages 123 alignés chacun sur un des excentriques 122a,b,c,d, constituant des guides pour des billes 124 formant les organes transmetteurs.

Dans la partie basse du bâti 120 est ménagé un espace dans lequel coulisse longitudinalement, parallèlement à l'axe de l'arbre d'entrée 121, une portion d'une tige ou barre 125 déplaçable linéairement sur des galets 126. La face supérieure de cette barre 125 faisant face aux perçages 123 du bâti 120 présente une came secondaire 127 formée de creusures successives qui constituent les levées de cette came secondaire. La distance D correspondant à la longueur de trois levées successives est égale à quatre fois la distance entre-axe des perçages 123.

Les billes lisses 124 sont en permanence en contact chacune avec l'un des excentriques 122a,b,c,d de la came primaire et avec la came secondaire et prennent appui sur le bâti 120. Cet ensemble correspond à un mécanisme comportant une came primaire à une levée et une came secondaire à trois levées.

Pour une révolution complète de l'arbre d'entrée 121 et donc de la came primaire 122, on obtient un déplacement linéaire de la barre égal à 1/3 de la distance D.

Dans cette exécution également les tangentes au point de contact de deux billes 124 avec les cames primaire 122 et secondaire 125 forment des angles aigus β et γ opposés de sorte que les éléments 120,121 et 125 du mécanisme sont bloqués lorsque l'arbre d'entrée 121 n'est pas entraîné en rotation.

Dans des variantes les organes transmetteurs peuvent comporter un corps cylindrique et des extrémités bombées. Ces organes transmetteurs peuvent également être formés de la juxtaposition de plusieurs éléments tournants pour limiter les frictions.

Dans toutes les formes d'exécution du mécanisme, les axes de guidage des guides rectilignes de l'élément intermédiaire sont disposés radialement et/ou perpendiculairement à l'axe du mécanisme.

Dans des formes d'exécution du mécanisme non illustrées, on peut faire en sorte que les organes transmetteurs soient reliés à l'élément intermédiaire ou au corps de cet élément intermédiaire par d'autres moyens que des guides rectilignes dans lesquels ils coulissent. Ainsi, on peut relier chaque organe transmetteur au corps de l'élément intermédiaire par une bielle articulée sur le corps de l'élément intermédiaire et portant l'organe transmetteur. Dans une telle exécution, il n'y a pas de frottement mais uniquement un roulement des organes transmetteurs sur les cames primaire et secondaire et sur le corps de l'élément intermédiaire. Dans une telle exécution, le déplacement des organes transmetteurs par rapport au corps de l'élément intermédiaire s'effectue suivant un arc de cercle soit selon un trajet curviligne et non rectiligne.

## Revendications

1. Mécanisme desmodromique comportant :
a) des organes transmetteurs (116;124) de mouvement reliés à un élément intermédiaire (110;120) et prenant appui sur celui-ci;
b) au moins une came primaire (112;122) en contact permanent avec chacun des organes transmetteurs;
c) des cames secondaires (114;127) en contact permanent avec les organes transmetteurs;
dans lequel les organes transmetteurs présentent des surfaces de contact avec les cames, de forme telle qu'elles assurent un contact permanent et simultané avec les cames primaire et secondaire; la came primaire, les cames secondaires et l'élément intermédiaire étant assemblés les uns aux autres de façon à se déplacer rotativement et/ou linéairement les uns par rapport aux autres d'une façon impérative et avec des vitesses différentielles invariables pour toutes les positions du mécanisme; ce mécanisme étant **caractérisé par le fait qu'**il comporte un corps formant l'élément intermédiaire (110), une came (111) pivotée sur ce corps et dont la surface constitue la came primaire (112) et une tige (113) déplaçable axialement dans ledit corps; **par le fait que** la partie de cette tige située dans le corps comporte au moins une zone constituant les cames secondaires (114); **par le fait que** le corps comporte des guides radiaux décalés axialement et angulairement les uns par rapport aux autres; et **par le fait que** les organes transmetteurs (116) se déplacent radialement dans ces guides perpendiculairement à l'axe du mécanisme et sont chacun en permanence en contact avec la came primaire et avec les cames secondaires ainsi qu'avec l'élément intermédiaire.

2. Mécanisme selon la revendication 1, **caractérisé par le fait que** les axes de guidage des guides rectilignes de l'élément intermédiaire (110) sont disposés radialement et/ou perpendiculairement à l'axe du mécanisme.

3. Mécanisme selon la revendication 2, **caractérisé par le fait que** les guides (115) du corps (110) sont répartis sur une hélice de 360° dont le pas est égal au ¾ de la longueur L.

4. Mécanisme selon la revendication 3, **caractérisé par le fait que** la valeur du décalage axial des guides du corps est égale à la longueur d'une portion en creux de la came secondaire (114) divisée par le nombre d'organes transmetteurs (116) plus un.

5. Mécanisme selon le préambule de la revendication 1, **caractérisé par le fait que** l'élément intermédiaire est constitué par un bâti (120) supportant un arbre d'entrée (121), et la came primaire (122) à une levée constituée par plusieurs excentriques décalés angulairement les uns par rapport aux autres, tous de mêmes amplitudes et décalés axialement le long de l'arbre d'entrée; **par le fait que** le bâti comporte des perçages alignés sur lesdits excentriques; **par le fait qu'**une barre (125) est montée déplaçable linéairement par rapport au bâti parallèlement à l'arbre d'entrée, cette barre présentant une surface faisant face aux perçages, comportant des creusures successives formant une came secondaire (127) et **par le fait que** les organes transmetteurs (124) coulissent dans lesdits perçages et sont en permanence en contact chacun avec l'un des excentriques de la came primaire (122) et avec la came secondaire (127) et prennent appui sur le bâti (120).

6. Mécanisme selon la revendication 5, **caractérisé par le fait que** la distance D correspondant à la longueur d'un nombre de creusures successives de la came secondaire (127) égales au nombre d'organes transmetteurs (124) moins un est égale à l'entre-axe entre deux excentriques de la came primaire (122) multiplié par le nombre d'organes transmetteurs (124).

## Claims

1. Positive drive comprising
a) motion transmitting organs (116; 124) connected with an intermediate element (110; 120) and leaning on it;
b) at least one primary cam (112; 122) in permanent contact with each of the transmitting organs;
c) secondary cams (114; 127) in permanent contact with the transmitting organs;
in which the transmitting organs exhibit contact surfaces with the cams, shaped so as to ensure a permanent and simultaneous contact with the primary and secondary cams; the primary cam, the secondary cams and the intermediate element being assembled so that they will be in a forced rotary and/or linear motion with invariable differential speeds relative to each other in all positions of the drive; this drive being **characterised in that** it comprises a body forming the intermediate element (110), a cam (111) pivoted on this body, its surface constituting the primary cam (112), and a shaft (113) axially movable in said body; **in that** the section of this shaft that is inside the body comprises at least one zone constituting the secondary cams (114); **in that** the body comprises radial guides axially and angularly offset relative to one another; and **in that** the transmitting organs (116) move radially in these guides in a direction perpendicular to the axis of the drive, each being in permanent contact with the primary cam and with the secondary cams as well as with the intermediate element.

2. Drive of claim 1, **characterised in that** the guiding axes of the straight guides of the intermediate element (110) have an arrangement radial and/or perpendicular to the axis of the drive.

3. Drive of claim 2, **characterised in that** the guides (115) of the body (110) are distributed over a helix of 360° having a pitch amounting to ¾ of the length L.

4. Drive of claim 3, **characterised in that** the amount of axial offset of the guides of the body is equal to the length of one hollow segment of the secondary cam (114), divided by the number of transmitting organs (116) plus one.

5. Drive according to the preamble of claim 1, **characterised in that** the intermediate element consists of a frame (120) supporting an input shaft (121), and the single-lift primary cam (122) consists of several eccentrics angularly offset relative to each other, all having the same amplitude and being axially offset along the input shaft; **in that** the frame includes bores aligned with said eccentrics; **in that** a bar (125) is mounted parallel to the input shaft, and so that it may move linearly relative to the frame, this bar exhibiting a surface facing the bores that comprises successive hollows forming a secondary cam (127), and **in that** the transmitting organs (124) slide in these bores, and each is in permanent contact with one of the eccentrics of the primary cam (122) and with the secondary cam (127) and leans on the frame (120).

6. Drive of claim 5, **characterised in that** the distance D corresponding to the length of a number of successive hollows of the secondary cam (127) that is equal to the number of transmitting organs (124) minus one, is equal to the distance between the centres of two eccentrics of the primary cam (122), multiplied with the number of transmitting organs (124).

## Patentansprüche

1. Desmodromischer Antrieb mit
a) Bewegungsübertragungsorganen (116; 124), die mit einem Zwischenelement (110; 120) verbunden sind und sich auf diesem abstützen;
b) zumindest einem Primärnocken (112; 122) in dauernder Berührung mit jedem der Übertragungsorgane;
c) Sekundärnocken (114; 127) in dauernder Berührung mit den Übertragungsorganen;
bei dem die Übertragungsorgane Berührungsoberflächen mit den Nocken aufweisen, deren Gestalt eine dauernde und gleichzeitige Berührung mit dem Primär- und den Sekundärnocken gewährleistet; wobei der Primärnocken, die Sekundärnocken und das Zwischenelement so zusammengefügt sind, dass sie sich in allen Stellungen des Antriebs zwangsläufig und mit unveränderlichen differentiellen Geschwindigkeiten drehend und/oder linear gegeneinander bewegen; dieser Antrieb **dadurch gekennzeichnet ist, dass** er einen Körper, der das Zwischenelement (110) bildet, einen auf diesem Körper drehbaren Nocken (111), dessen Oberfläche den Primärnocken (112) darstellt, sowie eine Welle (113), die axial in diesem Körper bewegbar ist, umfasst; **dadurch**, dass der im Körper befindliche Abschnitt dieser Welle zumindest eine Zone umfasst, die die Sekundärnocken (114) darstellt; **dadurch**, dass der Körper radiale Führungen umfasst, die axial und winkelmässig gegeneinander versetzt sind; und **dadurch**, dass sich die Übertragungsorgane (116) in diesen Führungen senkrecht zur Achse des Antriebs radial bewegen und jedes in dauernder Berührung mit dem Primärnocken und mit den Sekundärnocken sowie mit dem Zwischenelement steht.

2. Antrieb nach Anspruch 1, **dadurch gekennzeichnet, dass** die Führungsachsen der geradlinigen Führungen des Zwischenelements (110) radial und/oder senkrecht zur Achse des Antriebs angeordnet sind.

3. Antrieb nach Anspruch 2, **dadurch gekennzeichnet, dass** die Führungen (115) des Körpers (110) auf einer Schraubenlinie von 360° verteilt sind, deren Ganghöhe ¾ der Länge L beträgt.

4. Antrieb nach Anspruch 3, **dadurch gekennzeichnet, dass** der Betrag der axialen Versetzung der Führungen des Körpers gleich der Länge eines hohlen Abschnitts des Sekundärnockens (114), geteilt durch die Anzahl von Übertragungsorganen (116) plus eins ist.

5. Antrieb nach dem Oberbegriff des Anspruchs 1, **dadurch gekennzeichnet, dass** das Zwischenelement aus einem Rahmen (120) besteht, der eine Eingangswelle (121) hält, und der einhübige Primärnocken (122) aus mehreren winkelmässig gegeneinander versetzten Exzentern besteht, die alle die gleiche Amplitude besitzen und der Eingangswelle entlang gegeneinander axial versetzt sind; **dadurch**, dass der Rahmen Bohrungen umfasst, die mit diesen Exzentern ausgefluchtet sind; **dadurch**, dass ein Barren (125) parallel zur Eingangswelle und bezüglich des Rahmens linear bewegbar angebracht ist, wobei dieser Barren eine den Bohrungen zugewandte Oberfläche aufweist, die aufeinanderfolgende Senkungen umfasst, die einen Sekundärnocken (127) bilden, und **dadurch**, dass die Übertragungsorgane (124) in diesen Bohrungen gleiten und jedes in dauernder Berührung mit einem der Exzenter des Primärnockens (122) und mit dem Sekundärnocken (127) stehen und sich auf dem Rahmen (120) abstützen.

6. Antrieb nach Anspruch 5, **dadurch gekennzeichnet, dass** die Strecke D, die der Länge einer Anzahl von aufeinanderfolgenden Senkungen des Sekundärnockens (127) entspricht, die der Anzahl von Übertragungsorganen (124) minus eins gleich ist, dem Achsenabstand zwischen zwei Exzentern des Primärnockens (122), multipliziert mit der Anzahl von Übertragungsorganen (124), gleich ist.
